# EUROPÄISCHE PATENTSCHRIFT

(11) **EP 0 460 666 B1**
(45) Veröffentlichungstag und Bekanntmachung des Hinweises auf die Patenterteilung: **31.08.1994**
(21) Anmeldenummer: 91109284.9
(22) Anmeldetag: 06.06.1991
(51) Int. Cl.: B60R 1/06, H02K 41/02

(54) **Elektrisch betätigbarer Fahrzeug-Aussenspiegel**
Electrically activated vehicle rearview mirror
Rétroviseur extérieur de véhicule à fonctionnement électrique

(30) Priorität: 08.06.1990 DE 4018409
(43) Veröffentlichungstag der Anmeldung: 11.12.1991
(73) Patentinhaber: MAGNET-MOTOR GESELLSCHAFT FÜR MAGNETMOTORISCHE TECHNIK MBH, D-82319 Starnberg (DE)
(72) Erfinder: Heidelberg, Götz, Dipl.-Ing., W-8136 Starnberg-Percha (DE); Gründl, Andreas, Dr., W-8000 München 70 (DE); Ehrhart, Peter, Dr., W-8000 München 70 (DE)
(74) Vertreter: Klunker . Schmitt-Nilson . Hirsch

(56) Entgegenhaltungen:
- EP-A- 0 173 433
- EP-A- 0 198 085
- FR-A- 2 494 196
- GB-A- 1 191 827
- PATENT ABSTRACTS OF JAPAN vol. 6, no. 213 (M-167)(1091) 26 Oktober 1982, & JP-A-57 118946 (YOSHITERU TAKAHASHI) 24 Juli 1982
- PATENT ABSTRACTS OF JAPAN vol. 4, no. 60 (M-10)(542) 06 Mai 1980,& JP-A-55 25672 (OSAMU SANEMORI) 23 Februar 1980,
- PATENT ABSTRACTS OF JAPAN vol. 10, no. 259 (E-434)(2315) 04 September 1986,& JP-A-61 85054 (HITACHI LTD) 30 April 1986,
- PATENT ABSTRACTS OF JAPAN vol. 12, no. 302 (M-732)(3149) 17 August 1988,& JP-A-63 78844 (TOKAI RIKA CO LTD) 08 April 1988,

## Beschreibung

Die Erfindung betrifft einen elektrisch betätigbaren Fahrzeug-Außenspiegel, der im Gattungsbegriff des Anspruchs 1 angegebenen Art. Ein solcher Vorrichtung ist aus JP-A-57-118946 bekannt. Insbesondere betrifft die Erfindung einen Verstellantrieb für einen solchen Außenspiegel. Grundsätzlich betrifft die Erfindung aber auch allgemein einen Verstellantrieb zum Verstellen eines ersten Körpers relativ zu einem zweiten Körper, an den der erste Körper beweglich gelagert ist.

Bei bekannten elektrisch betätigbaren Fahrzeug-Außenspiegeln ist an einem am Fahrzeug angebrachten Gehäuse ein Spiegelträger kippbar
gelagert, und zwei elektrische Antriebsmotoren sind mit dem Spiegelträger gekoppelt. Die Antriebsmotoren sind bezüglich des Drehpunkts um 90° versetzt an dem Spiegelträger gekoppelt. Sie sind als Dreh-Elektromotoren ausgebildet und bewegen den Spiegel über ein Getriebe und Zahnstangen sowie am Spiegelträger angebrachte Gegenstücke. Grundsätzlich kann man die Kippbewegung mit einem einzigen Motor realisieren, wobei hierzu jedoch der mechanische Aufwand erhöht ist. Eine einfache Konstruktion ist mit zwei Motoren möglich.

Aber auch bei Verwendung von zwei Dreh-Elektromotoren ist der Montageaufwand aufgrund der vielen Einzelteile (Motoren, Getriebe, Zahnstangen ...) erheblich.

Der Erfindung liegt die Aufgabe zugrunde, einen elektrisch betätigbaren Fahrzeug-Außenspiegel der eingangs genannten Art anzugeben, der einen mechanisch einfachen Aufbau besitzt und sich durch eine relativ stabile Ruhestellung des Spiegels auszeichnet.

Diese Aufgabe wird erfindungsgemäß dadurch gelöst, daß
der Spiegelträger mit einer in Grenzen definierten Haft- und Gleitreibung im Gehäuse gehalten ist, wobei die Haft- und die Gleitreibung von der Kraft jedes Linearmotors einzeln oder gemeinsam definiert nach Amplitude oder nach Amplitude und Dauer der Motorkraft überwindbar sind.

Im stromlosen Zustand der Linearmotoren wird der Spiegelträger und mithin der an ihm befestigte Spiegel aufgrund der Haftreibung starr in einer definierten Stellung gehalten. Diese Haftreibung kann einen beträchtlichen Wert aufweisen, der so bemessen ist, daß der Spiegel bei sämtlichen in der Praxis auftretenden äußeren Belastungen seine Lage beibehält. Zum Verstellen des Spiegels wird nun der eine und/oder der andere Linearmotor für eine gewisse Zeitspanne eingeschaltet, wobei diese Zeitspanne natürlich davon abhängt, wie weit der Spiegel verstellt werden soll. In der Praxis wird die Einstellung des Spiegels bei gleichzeitiger Beobachtung des Spiegels vorgenommen.

Wenn der jeweilige Linearmotor (in der Praxis werden vorteilhafterweise beide Motoren gleichzeitig betrieben - Kraftreduzierung pro Motor) von Strom durchflossen wird, macht der "Läufer" des Linearmotors eine Bewegung, wobei zwischen dem feststehenden Teil und dem beweglichen Teil des Linearmotors eine bestimmte Kraftkomponente vorhanden ist. Diese Kraftkomponente wirkt auf den Spiegelträger ein, und abhängig von dieser Kraftkomponente wird zunächst die Haftreibung überwunden. Die Kraftkomponente wirkt dann gegen die Gleitreibung, die kleiner, zumindest nicht größer ist als die Haftreibung. Je nach Kraftamplitude erfolgt die Verstellung des Spiegelträgers um ein bestimmtes Stück. Bei gegebener Amplitude kann auch über die Einwirkungsdauer der Kraftkomponente der Hub des Spiegelträgers definiert werden.

Während bei dem bekannten elektrisch betätigbaren Fahrzeug-Außenspiegel das Ausmaß der Verstellung bei gegebener Motordrehzahl lediglich von der Dauer der Einwirkung abhängt, besteht diese Abhängigkeit bei der Erfindung entweder nur von der Amplitude der von dem Linearmotor erzeugten Kraft oder von der Amplitude und der Einwirkungszeit der Kraft. In der Praxis wird also jeder der Linearmotoren impulsförmig betrieben, so daß das Betätigungsteil des Linearmotors gegen den Spiegelträger "hämmert". Bei jedem "Hammerschlag" macht der Spiegelträger eine kleine Bewegung, so daß für eine umfangreiche Verstellung eine relativ große Anzahl von Schlägen auf den Spiegelträger aufzubringen ist.

In einer speziellen Ausführungsform der Erfindung ist vorgesehen, daß die Linearmotoren auf einer Trägerplatte des Gehäuses in einem Winkel von weniger als 180° bezüglich des Drehpunkts angeordnet sind, wobei die Hubrichtung jedes Linearmotors etwa senkrecht zur Spiegelaufnahmeebene des Spiegelträgers verläuft. Ist einer der Linearmotoren in Ruhe, so bildet sein Anlenkpunkt an dem Spiegelträger zusammen mit dem Drehpunkt die Kippachse für eine von dem anderen Linearmotor bewirkte Kippbewegung. Dazu müssen die Linearmotoren in der genannten Weise bezüglich des Drehpunkts gelagert sein. In der Praxis jedoch bewegt man beide Motoren gleichzeitig derart, daß der Spiegel um eine horizontale oder eine vertikale Achse bewegt wird, wodurch gleichzeitig die von jedem Motor aufzubringende Kraft reduziert wird. Zweckmäßig ist eine Anordnung im rechten Winkel bezüglich des Drehpunkts.

Die erfindungsgemäß verwendeten Linearmotoren können in besonderer Weise ausgestaltet sein, um speziell bei Kraftfahrzeug-Außenspiegeln eingesetzt zu werden, wobei es insbesondere auf eine raumsparende Ausbildung ankommt.

In einer Ausgestaltung sieht die Erfindung vor, daß die Linearmotoren dauermagnetische Erregung und mindestens eine im dauermagnetischen Feld befindliche stromdurchflossene Spule aufweisen. Speziell gibt es einen ringförmig angeordneten, radial magnetisierten Dauermagneten, wobei der magnetische Fluß durch zwei hälftige spiegelsymmetrische Eisenrückschlüsse, die magnetisch voneinander getrennt sind, und mit zugeordnetem ringförmigen parallel zur Achse sich erstreckendem Luftspalt so geführt wird, daß sich im radial inneren Teil der beiden Eisenrückschlüsse bezüglich der Achsrichtung entgegengesetzt gerichtete magnetische Flußrichtungen ergeben. In besonderer Weise wird der genannte Linearmotor dafür ausgestaltet, daß im ringförmigen Luftspalt die auf einem zylinderförmigen Spulenträger aufgebrachte Spule beweglich angeordnet ist, wobei der Spulenträger durch eine Öffnung im Eisenrückschluß einer Hälfte wenigstens teilweise nach außen durchgeführt wird und von ihm die Kraft der Spule auf den Spiegelträger übertragen wird. Hierbei ist der Spulenträger mindestens zum Teil aus ferromagnetischem Material gebildet, so daß die Öffnung im Eisenrückschluß magnetisch überbrückt wird. Vorzugsweise wird der Rückschluß bei einem rohrförmigen Spulenträger unbeweglich ausgeführt, so daß er nicht mitbewegt werden muß. Alternativ kann man Dauermagnet und Spule vertauschen, so daß der Dauermagnet bewegt wird und die Spule feststeht. Auch kann man die Anbringung des Motors am Gehäuse einerseits und am Spiegelträger andererseits umkehren.

Eine besonders lange Lebensdauer des jeweiligen Linearmotors wird dadurch erreicht, daß zwischen den Windungsanschlüssen auf der beweglichen Spule und den Öffnungen durch die Eisenrückschlüsse den Spulenstrom führende Federdraht- oder Litzenelemente vorgesehen sind. Hierdurch wird der Spulendraht nicht den Wechselbelastungen bei einer Spulenbewegung ausgesetzt. Die Federdraht- oder Litzenelemente sind so ausgestaltet, daß bei einer Spulenbewegung die Spule selbst keiner zusätzlichen Kraft z.B. Drehkraft ausgesetzt ist.

Eine alternative Ausgestaltung des Linearmotors sieht vor, daß mindestens eine Spule axial neben dem Dauermagneten mit diesem in einem gemeinsamen Rückschlußteil angeordnet ist und die beiden radial inneren, magnetisch voneinander getrennten Eisenrückschlußteile auf einer gemeinsamen beweglichen Achse festgelegt sind, die die Kraft nach außen überträgt.

Wie eingangs angedeutet, liegt ein wesentlicher Gesichtspunkt der Erfindung darin, mit Hilfe eines impulsförmigen Treiberstroms die Linearmotoren zu einer hämmernden Bewegung zu veranlassen, durch die mit einzelnen Stößen die Reibung des Lagerteils überwunden wird. Hierzu sieht die Erfindung speziell vor, daß die Spule mit einem Impulsstrom eines definierten Tastverhältnisses beaufschlagt wird, wobei die bei Stromfluß erzeugte Kraft größer ist als die Haftreibungskraft. Es wird also mit dieser Maßnahme erreicht, daß bei jedem Impuls die Haftreibung überwunden wird und sich der Spiegelträger ein kleines Stück bewegt. Durch eine rasche kurze Impulsfolge läßt sich auf diese Weise ein beträchtlicher definierter Hub erreichen.

Es sei angemerkt, daß die erfindungsgemäße Konstruktion mit in gewissen Grenzen definierter Haft- und Gleitreibung wichtig ist bei einem Linearmotor, da dessen "Läufer" bei Beaufschlagung mit einem Strom sich bis zu einem möglicherweise im Motor selbst definierten Anschlag bewegen würde, falls dieser Bewegung keine Reibungskraft entgegenstünde. Die Erfindung unterscheidet sich mithin wesentlich von einer elektromagnetischen Betätigungseinrichtung, wie sie z.B. von einer Tauchkernspule oder einem Relais dargestellt wird. Derartige bekannte Verstellvorrichtungen bewegen ein bewegliches Teil lediglich über einen vollständigen Hub von einer Endstellung in die andere Endstellung. Zwischenstellungen sind nicht möglich.

Durch die Erfindung ist es möglich, die Reibung einerseits und die Bestromung der Linearmotoren andererseits derart aufeinander abzustimmen, daß ein bestimmter Verstellweg einer bestimmten Anzahl von Stromimpulsen durch die Spule entspricht. Hierbei wird insbesondere vorgesehen, daß die Zahl der Stromimpulse zwischen den beiden Endstellungen des Spiegelträgers individuell auf den Reibungswert abgestimmt sind. Alternativ oder zusätzlich kann man die Amplitude der Verstellkraft durch die Amplitude der Stromimpulse definieren. Dabei entspricht ein starker Strom (hohe Amplitude) einem relativ langen Verstellhub.

Um die Amplitude der Verstellkraft zu definieren, kann man erfindungsgemäß bei einer bestimmten Stromamplitude der Stromimpulse in der Spule Teile der Eisenrückschlüsse magnetisch in Sättigung bringen.

Neben dem Beaufschlagen der Spule des jeweiligen Linearmotors mit mehreren Impulsen bietet die Erfindung auch die Möglichkeit, die Verstellkraft des Linearmotors über dessen Leistungsaufnahme so zu regeln, daß sie die Haftreibungskraft stets nur egalisiert und minimal überschreitet. Dadurch ergibt sich eine Verkippbewegung des Spiegelträgers proportional zur Einschaltzeit der Spule bzw. des Linearmotors im Dauerbetrieb. Mit anderen Worten, um eine Verstellung des Spiegels zu erreichen, wird der Strom des Linearmotors eingeschaltet. Dadurch setzt sich zunächst unter Überwindung der Haftreibung der Spiegelträger in Bewegung, und gegen die Gleitreibungskraft erfolgt dann ein Weiterbewegen des Linearmotors, bis die gewünschte Endstellung erreicht ist. Die Regelung der Stromstärke erfolgt dann in der Weise, daß sie nach Überschreiten der Haftreichungsgrenze (geänderte Leistungsaufnahme) zurückregelt und dann wieder angehoben wird. Dann wird der Strom (manuell) ausgeschaltet.

Wie oben erwähnt, spielt neben der Ausgestaltung des Linearmotors die Eigenschaft bzw. die Ausgestaltung des Kipplagers eine besonderere Rolle. In einer Ausgestaltung der Erfindung ist vorgesehen, daß der Spiegelträger mit einer Kugelkalotte aus ferromagnetischem Material ausgestattet ist, welche in einem mit Dauermagneten bestückten Gegenlager am Gehäsue gelagert ist. Dabei sind vorzugsweise zwischen den Dauermagneten und der Kugelkalotte Abstandsstücke vorgesehen, die einen Luftspalt definieren. Dadurch erreicht man, daß die Kennlinie der magnetischen Anziehungskraft in einem vom Abstand weniger stark abhängigen Bereich verschoben wird. Zwischen der Kugelkalotte und den Gegenlagern ist eine ausreichende Haftreibung vorhanden, die - ebenso wie die Gleitreibung - durch Justierung des Abstands der Dauermagnete von der Kugelkalotte in gewissen Grenzen definiert eingestellt werden kann. Hierzu wird vorzugsweise dafür gesorgt, daß die Abstandsstücke aus einem Material bestehen, das in bezug auf das Material der Kugelkalotte einen konstanten Reibwert aufweist. Bevorzugt wird die Kugelkalotte so ausgebildet, daß der Drehpunkt in der Ebene des Spiegelträgers bzw. im Schwerpunkt des verkippten Teils liegt, so daß die Anordnung nach außen drehmomentfrei ist.

Man kann grundsätzlich die Halterung ausschließlich aus Elementen aufbauen, die aufgrund der speziellen mechanischen Eigenschaften eine bestimmte Haftreibungskraft und eine bestimmte Gleitreibungskraft festlegen. In einer besonders günstigen Ausführungsform sieht die Erfindung vor, daß an dem Gehäuse zusätzlich zu den Dauermagneten eine Magnetspule vorgesehen ist, die bei Stromfluß das magnetische Feld der Dauermagnete und mithin die Haltekraft auf die Kugelkalotte schwächt. Zweckmäßigerweise ist die Magnetspule mit den Linearmotoren entweder in Serie oder parallel geschaltet. Dadurch ergibt sich immer dann, wenn zumindest einer der Linearmotoren in Betrieb ist, ein geändertes Haftreibungsverhalten am Kipplager. Durch ein solches "Lockern" der Reibungskraft am Kipplager kann man mit relativ schwachen Strömen die Linearmotoren zur Erzielung des gewünschten Hubs veranlassen.

In einer alternativen Ausgestaltung der Erfindung, die jedoch auch zusätzlich zu dem oben beschriebenen Kalottenlager vorgesehen sein kann, sieht die Erfindung vor, daß den Linearmotoren jeweils bezüglich des Drehpunkts gespiegelt Reibungselemente zugeordnet sind, die bei Nichtbetätigung der Linearmotoren den Spiegelträger fixieren. Mit einer solchen Anordnung von Reibungselementen läßt sich die gewünschte Reibungskraft gut einstellen. Alternativ oder zusätzlich kann man vorsehen,
daß der Spiegelträger mit einem Stempel ausgestattet ist, der in einem Lager, dessen Festigkeit elektrisch beeinflußbar ist und das mit dem Gehäuse verbunden ist, gelagert ist. Das Lager enthält ein mit ferromagnetischem Korn- oder Pulvermaterial gefülltes Gefäß, wobei das Korn- oder Pulvermaterial durch einen Dauermagneten verfestigt wird und dadurch den Stempel in einer definierten Lage hält. Eine stromdurchflossene Magnetspule kann die Wirkung des dauermagnetischen Flusses aufheben oder abschwächen, um den Spiegelträger mit Hilfe der Linearmotoren zu bewegen.

Die Magnetspule zum Abschwächen oder Aufheben des dauermagnetischen Flusses ist in Serie oder parallel mit den Linearmotoren geschaltet. Damit kann erreicht werden, daß das Lager nur bei Betätigung eines der Linearmotoren beweglich ist.

Wie eingangs angedeutet, ist ein grundlegender Aspekt der Erfindung darin zu sehen, daß mit Hilfe eines Linearmotors eine definierte Verstellung eines beweglichen Teils gegenüber einem ortsfesten Teil erreicht wird. Die Erfindung schafft außer dem speziellen und bevorzugten Ausführungsbeispiel eines Fahrzeug-Außenspiegels also auch noch einen Verstellantrieb, mit einem elektrischen Linearmotor, von dessen beiden relativ zueinander beweglichen Teilen das eine Teil z.B. der Stator, fest an einem ersten Körper angebracht ist, während das andere Teil, z.B. der Läufer mit einem zweiten, relativ zu dem ersten Körper beweglichen Körper gekoppelt ist, wobei zwischen dem ersten und dem zweiten Körper eine Lagerung und eine in Grenzen definierte Haft- und Gleitreibung vorgesehen ist, die von der Kraft des bestromten Linearmotors definiert überwunden wird.

Vorzugsweise wird der Linearmotor so bestromt, daß er mit definierter Amplitude und definiertem Tastverhältnis mit Stromimpulsen beaufschlagt wird. Damit "hämmert" der Linearmotor gegen den mit ihm gekoppelten Körper, um ihn zu bewegen.

Alternativ kann der Linearmotor auch leistungsgeregelt betrieben werden.

Im folgenden werden Ausführungsbeispiele der Erfindung anhand der Zeichnung näher erläutert. Es zeigen:
- Figur 1: eine schematische Ansicht eines an einem Gehäuse angebrachten elektrisch betätigbaren Kraftfahrzeug-Außenspiegels,
- Figur 2: den Außenspiegel nach Fig. 1, jedoch in einer um 90° gedrehten Ansicht,
- Figur 3: eine teilweise geschnittene Darstellung eines elektrischen Linearmotors, wie er für den Außenspiegel nach Fig. 1 und 2 verwendet wird,
- Figur 4: eine Längsschnittansicht durch eine alternative Ausgestaltung eines elektrischen Linearmotors,
- Figur 5: eine weitere Ausführungsform eines Kipplagers, und
- Figur 6: eine zusätzliche Ausführungsform eines Kipplagers.

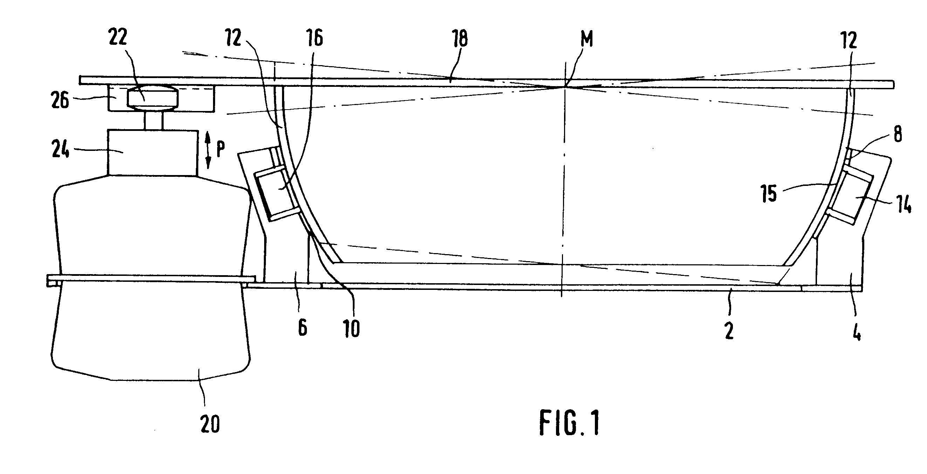

Die Erfindung soll nachstehend für einen Kraftfahrzeug-Außenspiegel beschrieben werden. Gemäß Fig. 1 ist an einem Gehäuse, das hier lediglich symbolisch durch eine Trägerplatte 2 veranschaulicht ist, über Stützen 4, 6 und ein Kalottenlager bildende Lagerteile 8, 10 eine Kugelkalotte 12 gelagert, die von in den Lagerteilen 8 und 10 befindlichen Haltemagneten 14 und 16 mit definierter Haftreibung in einer bestimmten Stellung gehalten wird. Auf der der Trägerplatte 2 abgewandten Seite ist an der Kugelkalotte 12 ein Spiegelträger 18 befestigt.

Das Kalottenlager 8, 10 und die Kugelkalotte 12 sind so ausgestaltet, daß der Spiegelträger 18, der einen nicht dargestellten Rückspiegel trägt, um einen Drehpunkt M in bestimmten Grenzen in alle Richtungen kippbar ist. Mögliche Kippstellungen sind in Fig. 1 durch gestrichelte Linien angedeutet.

An der Trägerplatte 2 ist ein elektrischer Linearmotor 20 gelagert, der mit einem Kupplungszapfen 22, der seinerseits an einem beweglichen Kolben 24 des Linearmotors 20 befestigt ist, über ein Zapfenlager 26 mit dem plattenförmigen Spiegelträger 18 gekoppelt ist.

Zum Kippen des Spiegelträgers 18 wird in noch zu beschreibender Weise der Linearmotor 20 mit Stromimpulsen definierter Amplitude und definierten Tastverhältnisses beaufschlagt, um den Kolben 24 in Richtung des Doppelpfeils P nach oben oder nach unten zu bewegen, so daß über den Kupplungszapfen 22 der Spiegelträger 18 verstellt wird.

Wie gesagt, ist durch die Kipplagerung, die aus dem Kalottenlager 8, 10 mit den Dauermagneten 14 und 16 sowie Abstandstücken 15 zwischen den Lagerteilen 8 und 10, und der Kugelkalotte 12 besteht, eine bestimmte Haftreibung und eine bestimmte Gleitreibung definiert. Wenn der Linearmotor 20 sich im Ruhezustand befindet, hält deshalb die Kugelkalotte 12 mit dem daran befestigen Spiegelträger 18, und folglich auch der am Spiegelträger 18 befestigte (nicht dargestellte) Spiegel sicher.

Wenn der Linearmotor 20 mit impulsförmigen Strom beaufschlagt wird, entsteht eine Kraftkomponente durch den sich in Fig. 1 senkrecht nach oben bewegenden Kolben 24, der in noch zu beschreibender Weise hier als beweglicher Spulenträger ausgebildet ist. Aufgrund dieser Kraftkomponente drückt der Kupplungszapfen 22 innerhalb des Zapfenlagers 26 gegen den Spiegelträger 18, um diesen gemäß Fig. 1 im Uhrzeigersinn ein kleines Stück zu kippen. Dabei wird die Haftreibung des Kipplagers überwunden, und entsprechend der Größe (Amplitude) der Kraftkomponente und der Einwirkungszeit (Vorhandensein) der Kraftkomponente wird die Gleitreibungskraft des Kipplagers, die kleiner ist als die Haftreibung, überwunden, so daß sich der Spiegelträger ein Stück bewegt. Durch wiederholte Stromimpulse "hämmert" der Linearmotor 20 gegen den Spiegelträger, so daß dieser durch eine geeignete Anzahl von Impulsen ein bestimmtes Stück verstellt wird. In der Praxis kann man die Anzahl der Impulse in geeigneter Weise auf den vollen Hub des Spiegelträgers abstimmen. Vorzugsweise macht man Haft- und Gleitreibung gleich groß.

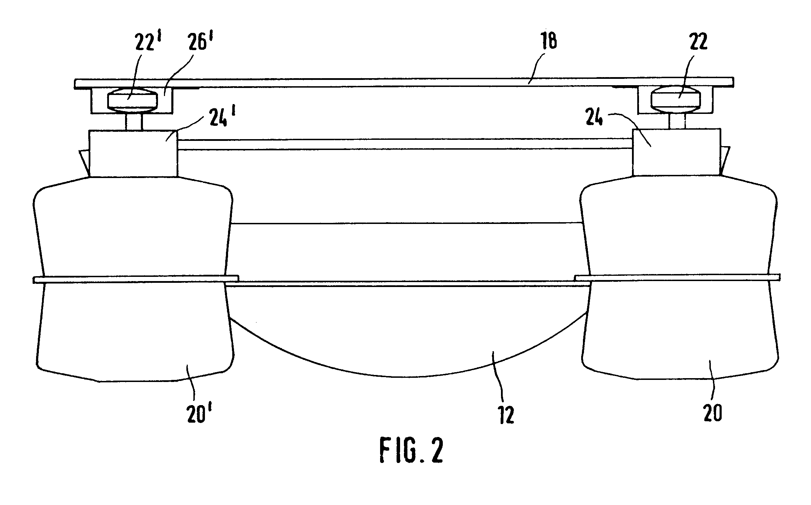

Figur 2 zeigt den Außenspiegel nach Fig. 1 in einer um 90° gedrehten Anordnung, so daß außer dem bereits erwähnten Linearmotor 20 noch ein weiterer Linearmotor 20' erkennbar ist, der bezüglich des Drehpunkts M (in einer Ebene senkrecht zur Zeichnungsebene der Fig. 2) um 90° versetzt angeordnet ist.

Der Linearmotor 20' besitzt einen Kolben 24', an dem ein Kupplungszapfen 22' befestigt ist, der in ein entsprechendes Zapfenlager 26' am Spiegelträger 18 eingreift.

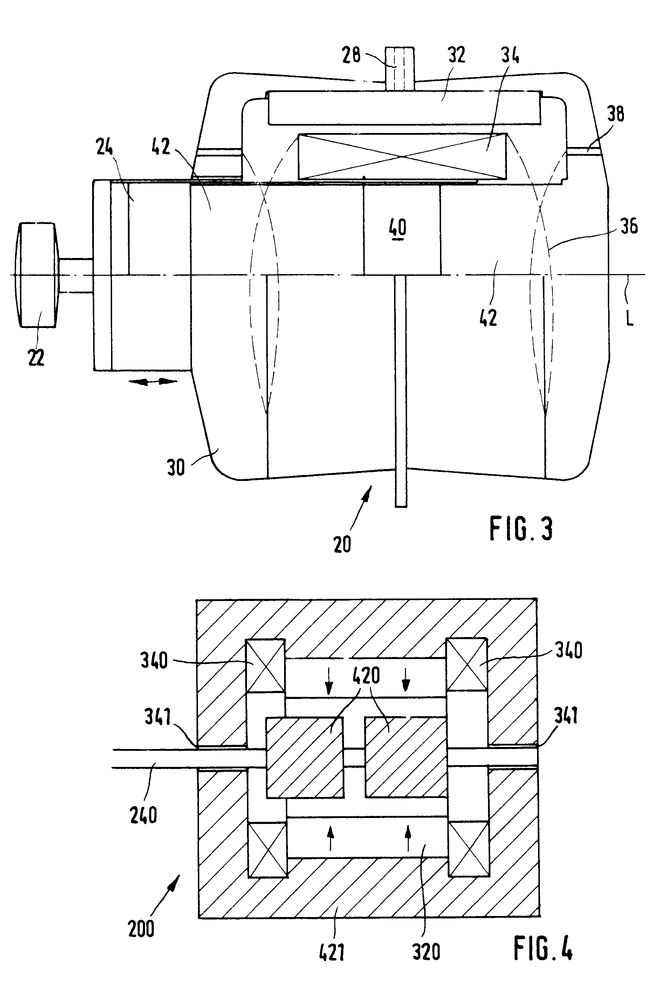

Die beiden Linearmotoren 20 und 20' sind identisch ausgebildet. Fig. 3 zeigt stellvertretend für beide Motoren den Aufbau des Linearmotors 20.

An einem Außengehäuse des Linearmotors 20 befindet sich ein Befestigungselement 28, mit dessen Hilfe der Linearmotor 20 an der Trägerplatte 2 befestigt wird.

Im Inneren des Gehäuses ist radial bezüglich der Längsachse L des Linearmotors ein Dauermagnet 32 gelagert. An den Dauermagneten 32 schließt sich bis zur Mitte des Motors hin ein Eisenrückschluß 42 an, der in der axialen Mitte durch ein magnetisch nicht-leitendes Trennstück aufgeteilt ist. Zwischen diesem Trennstück 40 und dem Dauermagneten 32 befindet sich eine bewegliche Spule 34, die über Federdraht- oder Litzendraht-Kabelelemente, die durch Kabeldurchlässe 38 nach außen geführt sind, an eine Stromquelle angeschlossen ist. Die hier nicht näher interessierende Stromquelle umfaßt eine Leistungselektronik, die vorzugsweise gemeinsam für beide Linearmotoren ausgebildet ist und nur ein Leistungsbauelement enthält. Die Elektronik gibt bei Betätigung einer Taste Treiberimpulse mit definierter Amplitude und definiertem Tastverhältnis ab. Solange die Taste betätigt wird, empfängt die Spule 34 Stromimpulse.

Abhängig von der Stromrichtung trachtet die Spule 34 mit dem Spulenträger 24, sich gemäß Fig. 3 nach links oder nach rechts zu bewegen. Wie oben bereits erwähnt, wird durch diese Kraftkomponente zunächst die Haftreibung des Kipplagers überwunden und anschließend der Spiegelträger gegen die Gleitreibungskraft ein Stück bewegt.

Fig. 4 zeigt eine alternative Ausführungsform des elektrischen Linearmotors. Der Linearmotor 200 nach Fig. 4 besitzt in einem nicht dargestellten Gehäuse als festen Eisenrückschluß ein Joch 421 kreisförmigen Querschnitts, in dessen beiden Stirnseiten jeweils eine Lagerbohrung 341 für eine verschiebliche Achse 240 gelagert ist. Links an der Achse 240 ist ein Zapfenlager vorhanden, ähnlich wie bei dem in Fig. 3 dargestellten Linearmotor.

Fest auf der Achse 240 sind zwei bewegliche Eisenrückschlußelemente 420 angeordnet, bezüglich derer radial außerhalb ein Dauermagnet 320 angeordnet ist, wobei die Feldlinien durch Pfeile angedeutet sind. An den beiden Stirnseiten des Dauermagneten 320 befinden sich Spulenelemente 340.

Fließt in die eine oder in die andere Richtung ein Strom durch die Spulenelemente 340, so ergibt sich über das Joch 421 und die Rückschlußelemente 420 ein magnetisches Feld, aufgrund dessen sich die Rückschlußelemente 420 und damit die Achse 240 nach links oder nach rechts bewegt.

Eine in der Zeichnung nicht näher dargestellte Steuereinheit, die vorzugsweise zusammen mit Betätigungstasten in einem Gehäuse ausgebildet und im Inneren eines Kraftfahrzeugs an geeigneter Stelle angebracht ist, liefert bei jeder Tastenbetätigung eine Anzahl von elektrischen Impulsen, die ein bestimmtes Tastverhältnis und eine bestimmte Amplitude aufweisen. Amplitude und Tastverhältnis sind derart auf die Kennwerte des Linearmotors abgestimmt, daß sich bei jedem Impuls eine axiale Kraftkomponente des Linearmotors ergibt, durch welche die Haftreibungskraft des Kipplagers überwunden wird. Die Kraftkomponente ist nur geringfügig größer als die entsprechende Haftreibungskraft, so daß der Spiegelträger 18 ein sehr kleines Stück bewegt wird. Dadurch läßt sich der Spiegel sehr feinstufig einstellen. Mitberücksichtigt bei der Auslegung des Linearmotors und bei der Impulsform wird der Hub, den der betreffende Linearmotor machen muß, um den Spiegel über den gesamten verfügbaren Kippbereich zu kippen.

In Figs. 1 und 2 ist als Kipplager das Kalottenlager dargestellt, wobei die Reibung zwischen der Kugelkalotte 12 einerseits und den Lagerteilen 8 und 10 in Verbindung mit den Haltemagneten 14 und 16 und den Reibelementen 15 andererseits gewünschte Haftreibung und Gleitreibung liefert.

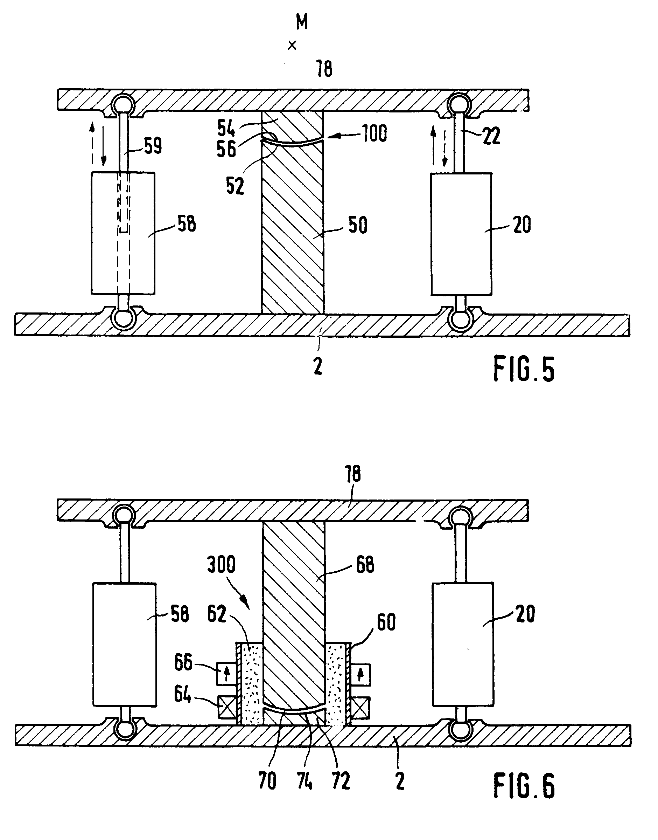

Fig. 5 zeigt eine alternative Ausgestaltung für das Kipplager. Gemäß Fig. 5 ist zwischen dem Spiegelträger 18 und der Trägerplatte 2 (Gehäuse) ein Kipplager 100 angebracht, welches eine Stütze 50 an der Trägerplatte 2 und einen Block 54 auf der Rückseite des Spiegelträgers 18 aufweist. Die Stütze 50 besitzt eine konkave Lagerschale 52, in der eine konvexe Lagerfläche 56 des Blocks 54 aufgenommen ist.

Rechts in Fig. 5 ist der Linearmotor 20 dargestellt. Er ist mit einem Ende gelenkig in einer Ausnehmung der Trägerplatte 2 gelagert. Der Lagerzapfen 22 ist ähnlich, wie es in den Fig. 1 und 2 dargestellt ist, mit der Rückseite des Spiegelträgers 18 gekoppelt.

Durch die Lagerelemente 52, 56 wird ein Drehpunkt M definiert. Spiegelbildlich bezüglich dieses Drehpunkts M ist auf der dem Linearmotor 20 gegenüberliegenden Seite ein Reibungselement 58 angeordnet, welches ähnlich gelagert ist wie der Linearmotor 20. Durch das zylindrische Reibungselement 58 wird zwischen dessen Achse 59 und dem die Achse 59 umgebenden Körper eine bestimmte Haftreibung und eine bestimmte Gleitreibung definiert.

Wenn der Linearmotor 20 den Lagerzapfen 22 in Richtung des durchgehenden Pfeils bewegt, kippt der Spiegelträger 58 um das Kipplager 100 im Gegenuhrzeigersinn, wobei die Achse 59 in Richtung des ausgezogenen Pfeils in das Reibungselement 58 eintaucht. Wird der Lagerzapfen 22 zurückgezogen, kippt der Spiegelträger 18 im Uhrzeigersinn, wobei dann der Lagerzapfen 22 und die Achse 59 des Reibungselements 58 in Richtung der gestrichelten Pfeile bewegt werden.

Die in Fig. 5 dargestellte Anordnung ist in ähnlicher Weise für die andere Kippachse vorhanden, d.h. bei Betrachtung der Anordnung nach Fig. 5 aus einer 90° versetzten Blickrichtung ergibt sich ein ähnliches Bild.

Fig. 6 zeigt eine weitere Ausführungsform des Kipplagers. Auf beiden Seiten eines zwischen dem Spiegelträger 18 und der Trägerplatte 2 befindlichen Kipplagers 300 sind - ähnlich wie bei der Ausführungsform nach Fig. 5 - ein Linearmotor 20 und ein Reibungselement 58 angeordnet. Man kann aber aufgrund der speziellen Ausgestaltungen des Kipplagers das Reibungselement auch weglassen. (Auch hier ist ein zweiter, nicht dargestellter Linearmotor vorgesehen).

Das Kipplager 300 enthält ein an der Trägerplatte 2 befestigtes zylindrisches Gehäuse 60, in welchem sich ferromagnetisches Korn- oder Pulvermaterial 62 befindet. Außen auf dem zylindrischem Gehäuse 60 ist fest ein Dauermagnet 66 angeordnet, dessen Magnetisierungsrichtung durch Pfeile angedeutet ist. Axial versetzt bezüglich des Dauermagneten 66 ist eine Spule 64 vorgesehen. Von der Rückseite des Spiegelträgers 18 steht ein Stempel 68 mit einer konvexen Lagerfläche 70 ab, die in einer konkaven Lagerschale 74 eines an der Trägerplatte 2 befestigten Blocks 72 gelagert ist.

Durch den Dauermagneten 66 wird das ferromagnetische Pulvermaterial verfestigt, so daß der Stempel 68 fest von dem erstarrten Material gehalten wird. Wenn durch die Spule 64 ein Strom fließt, wird die Wirkung des Dauermagneten zumindest teilweise aufgehoben, so daß sich der Stempel 68 in dem Material 62 bewegen kann.

Die Spulen des Linearmotors 20 und des weiteren Linearmotors sind mit der das Gehäuse 60 umgebenden Spule 64 elektrisch gekoppelt, z.B. parallel geschaltet oder in Serie geschaltet. Wenn also mindestens einer der Linearmotoren betätigt wird, wird auch die Spule 64 von Strom durchflossen, so daß der Stempel 68 innerhalb des Materials 62 bewegbar ist.

Abwandlungen der oben beschriebenen Ausführungsform sind möglich. So kann z.B. bei der Ausführungsform nach Fig. 1 und 2 eine Spulenanordnung in der Nähe der Dauermagnete 14 und 16 vorgesehen sein, wobei diese Spulenanordnung elektrisch mit den Spulen der Linearmotoren 20, 20' gekoppelt ist. Dadurch läßt sich erreichen, daß die Haft- und Gleitreibung durch teilweise Kompensation des dauermagnetischen Feldes während des Betriebs des Linearmotors herabgesetzt wird.

## Patentansprüche

1. Elektrisch betätigbarer Fahrzeug-Außenspiegel, mit einem Gehäuse (2), an dem ein Spiegelträger (18) um einen festen Drehpunkt (M) kippbar gelagert ist, und zwei elektrischen Antriebsmotoren (20, 20'; 200), die mit dem Spiegelträger (18) gekoppelt sind, wobei die Antriebsmotoren als Linearmotoren (20, 20', 200) ausgebildet sind und
dadurch gekennzeichnet,
daß der Spiegelträger (18) mit einer in Grenzen definierten Haft- und Gleitreibung gehalten ist, wobei die Haft- und die Gleitreibung von der Kraft jedes Linearmotors (20, 20'; 200) einzeln oder gemeinsam definiert nach Amplitude oder nach Amplitude und Dauer der Motorkraft überwindbar ist.

2. Vorrichtung nach Anspruch 1,
dadurch gekennzeichnet,
daß die Linearmotoren auf einer Trägerplatte (2) des Gehäuses in einem Winkel von weniger als 180° bezüglich des Drehpunkts (M) angeordnet sind, wobei die Hubrichtung jedes Linearmotors etwa senkrecht zur Spiegelaufnahmeebene des Spiegelträgers (18) verläuft.

3. Vorrichtung nach Anspruch 1 und 2,
dadurch gekennzeichnet,
daß die Linearmotoren dauermagnetische Erregung und mindestens eine im dauermagnetischen Feld befindliche, stromdurchflossene Spule (34, 340) aufweisen.

4. Vorrichtung nach Anspruch 3,
gekennzeichnet durch
einen ringförmig angeordneten, radial magnetisierten Dauermagneten (32, 320), wobei der magnetische Fluß durch einen spiegelsymmetrisch aufgebauten Eisenrückschluß (42), radial innen magnetisch getrennt und mit zugeordnetem, ringförmigem, parallel zur Achse sich erstreckendem Luftspalt so geführt ist, daß sich im radial inneren Teil links und rechts von der Trennung, bezogen auf die Achsrichtung entgegengesetzt gerichtete magnetische Flußrichtungen ergeben.

5. Vorrichtung nach Anspruch 4,
dadurch gekennzeichnet,
daß im ringförmigen Luftspalt die auf einem zylindrischen Spulenträger (24) montierte Spule (34) beweglich vorgesehen ist, wobei der Spulenträger (24) zumindest teilweise durch eine Öffnung im Eisenrückschluß (42) nach außen durchgeführt wird und von ihm die Kraft der Spule (34) auf den Spiegelträger (18) übertragen wird.

6. Vorrichtung nach Anspruch 5,
dadurch gekennzeichnet,
daß der zylinderförmige Spulenträger (24) mindestens zum Teil aus ferromagnetischem Material besteht, so daß die Öffnung im Eisenrückschluß magnetisch überbrückt wird.

7. Vorrichtung nach Anspruch 5 und 6,
dadurch gekennzeichnet,
daß zwischen den Windungsanschlüssen auf der beweglichen Spule (24) und den Öffnungen durch die Eisenrückschlüsse (42) den Spulenstrom führende Federdraht- oder Litzenelemente (36) vorgesehen sind.

8. Vorrichtung nach Anspruch 4,
dadurch gekennzeichnet,
daß mindestens eine Spule (340) axial neben dem Dauermagneten (320) mit diesem in einem gemeinsamen Rückschlußteil (421) angeordnet ist und die beiden axial angeordneten, radial inneren magnetisch getrennten Eisenrückschlußteile (420) auf einer gemeinsamen, beweglichen Achse (240) befestigt sind, die die Kraft nach außen überträgt.

9. Vorrichtung nach einem der Ansprüche 1 bis 8,
dadurch gekennzeichnet,
daß die Spule mit einem Impulsstrom eines definierten Tastverhältnisses beaufschlagt ist, wobei die bei Stromfluß erzeugte Kraft größer ist als die Haftreibungskraft.

10. Vorrichtung nach Anspruch 9,
dadurch gekennzeichnet,
daß ein bestimmter Verstellweg einer bestimmten Anzahl von Stromimpulsen durch die Spule (34, 340) entspricht.

11. Vorrichtung nach Anspruch 10,
dadurch gekennzeichnet,
daß die Zahl der Stromimpulse zwischen den beiden Endstellungen des Spiegelträgers individuell auf die Reibungswerte abgestimmt ist.

12. Vorrichtung nach Anspruch 9 bis 11,
dadurch gekennzeichnet,
daß die Amplitude der Verstellkraft durch die Amplitude der Stromimpulse definiert wird.

13. Vorrichtung nach einem der Ansprüche 9 bis 12,
dadurch gekennzeichnet,
daß die Amplitude der Verstellkraft dadurch definiert ist, daß bei einer bestimmten Stromamplitude der Stromimpulse in der Spule Teile der Eisenrückschlüsse magnetisch gesättigt sind.

14. Vorrichtung nach einem der Ansprüche 1 bis 8,
dadurch gekennzeichnet,
daß die Verstellkraft des Elektrolinearmotors über seine Leistungsaufnahme derart geregelt ist, daß sie die Haftreibungskraft nur egalisiert und minimal überschreitet, wodurch sich die Hubbewegung des Linearmotors proportional zur Einschaltzeit der Spule im Dauerbetrieb ergibt.

15. Vorrichtung nach einem der Ansprüche 1 bis 14,
dadurch gekennzeichnet,
daß der Spiegelträger (18) mit einem Kipplager in Form einer Kugelkalotte (12) aus ferromagnetischem Material ausgestaltet ist, die in einem mit Dauermagneten (14, 16) bestückten Gegenlager am Gehäuse gelagert ist.

16. Vorrichtung nach Anspruch 15,
dadurch gekennzeichnet,
daß mittels Abstandsstücken (15) zwischen den Dauermagneten (14, 16) und der Kugelkalotte (12) ein definierter Luftspalt eingestellt wird.

17. Vorrichtung nach Anspruch 16,
dadurch gekennzeichnet,
daß die Abstandsstücke (15) aus einem Material bestehen, das bezüglich dem Material der Kugelkalotte (12) einen konstanten Reibwert aufweist.

18. Vorrichtung nach einem der Ansprüche 15 bis 17,
dadurch gekennzeichnet,
daß an dem Gehäuse zusätzlich zu den Dauermagneten (14, 16) eine Magnetspule vorgesehen ist, die bei Stromfluß das magnetische Feld der Dauermagnete und mithin die Haltekraft auf die Kugelkalotte (12) schwächt.

19. Vorrichtung nach Anspruch 18,
dadurch gekennzeichnet,
daß die Magnetspule in Serie oder parallel mit den Linearmotoren (20, 22; 200) geschaltet ist.

20. Vorrichtung nach einem der Ansprüche 1 bis 19, insbesondere 1 bis 14,
dadurch gekennzeichnet,
daß den Linearmotoren jeweils bezüglich des Drehpunkts (M) gespiegelt Reibungselemente (58) zugeordnet sind, die bei Nichtbetätigung der Linearmotoren den Spiegelträger (18) fixieren.

21. Vorrichtung nach einem der Ansprüche 1 bis 14 und 20,
dadurch gekennzeichnet,
daß der Spiegelträger (18) mit einem Stempel (68) ausgestattet ist, der in einem Lager (300, 60-74), dessen Festigkeit elektrisch beeinflußbar ist und das mit dem Gehäuse (2) verbunden ist, gelagert ist.

22. Vorrichtung nach Anspruch 21,
dadurch gekennzeichnet,
daß das Lager (300) ein mit ferromagnetischem Korn- oder Pulvermaterial (62) gefülltes Gefäß (60) ist, das durch einen Dauermagneten (66) verfestigt wird und dessen dauermagnetischer Fluß durch eine stromdurchflossene Magnetspule (64) abgeschwächt oder kompensiert wird.

23. Vorrichtung nach Anspruch 22,
dadurch gekennzeichnet,
daß die Magnetspule (64) in Serie oder parallel mit den Linearmotoren (20, 20'; 200) geschaltet ist.

24. Verstellantrieb, mit einem elektrischen Linearmotor, von dessen beiden relativ zueinander beweglichen Teilen das eine Teil, z.B. der Stator, fest an einem ersten Körper (2) angebracht ist, während das andere Teil, z.B. der Läufer, mit einem zweiten, relativ zu dem ersten Körper (2) beweglichen Körper (18) gekoppelt ist, wobei zwischen dem ersten und dem zweiten Körper (2, 18) eine Lagerung (10, 12; 100; 300) und eine in Grenzen definierte Haft- und Gleitreibung vorgesehen ist, die von der Kraft des bestromten Linearmotors (20, 22'; 200) definiert überwunden wird.

25. Verstellantrieb nach Anspruch 24,
dadurch gekennzeichnet,
daß der Linearmotor mit definierten Stromimpulsen gespeist wird.

26. Verstellantrieb nach Anspruch 24,
dadurch gekennzeichnet,
daß zur Überwindung der Reibung die Leistung des Linearmotors geregelt wird.

## Claims

1. An electrically operated exterior mirror for vehicles, having a housing (2) to which a mirror holder (18) is pivoted about a fixed pivot (*M*) and a pair of electric driving motors (20, 20'; 200) which are coupled with the mirror holder (18), the driving motors being designed as linear motors (20, 20'; 200), characterized in that the mirror holder (18) is held with a static friction and sliding friction defined within limits, the static friction and sliding friction being overcome by the force of each linear motor (20, 20'; 200) singly or jointly defined in terms of amplitude or of amplitude and duration of the motor force.

2. The device of claim 1, characterized in that the linear motors are disposed on a carrier plate (2) of the housing at an angle of less than 180° with respect to the pivot (*M*), the direction of stroke of each linear motor extending substantially perpendicular to the mirror receiving plane of the mirror holder (18).

3. The device of claims 1 and 2, characterized in that the linear motors have permanent-magnetic excitation and at least one current-carrying coil (34, 340) located in the permanent-magnetic field.

4. The device of claim 3, characterized by a radially magnetized permanent magnet (32, 320) disposed in a ring, the magnetic flux being guided through a mirror-symmetrically constructed magnetic return path (42), magnetically separated on the radially inside and with an associated annular air gap extending parallel to the axis, in such a way as to produce opposite magnetic flux directions, with respect to the axial direction, in the radially inner part on the left and right of the separation.

5. The device of claim 4, characterized in that the coil (34) mounted on a cylindrical coil support (24) is provided movably in the annular air gap, the coil support (24) being led outside at least partly through an opening in the magnetic return path (42) and transmitting the force of the coil (34) onto the mirror holder (18).

6. The device of claim 5, characterized in that the cylindrical coil support (24) is made at least partly from ferromagnetic material so that the opening in the magnetic return path is magnetically bridged.

7. The device of claims 5 and 6, characterized in that spring wire or stranded elements (36) carrying the coil current are provided between the winding connections on the movable coil (24) and the openings through the magnetic return paths (42).

8. The device of claim 4, characterized in that at least one coil (340) is disposed axially beside the permanent magnet (320) in a common return path portion (421) therewith and the pair of axially disposed, radially inner magnetically separated return path portions (420) are fastened to a common, movable axle (240) which transmits the force outside.

9. The device of any of claims 1 to 8, characterized in that the coil is subjected to a pulsed current of a defined pulse-duty factor, the force produced upon current flow being greater than the static frictional force.

10. The device of claim 9, characterized in that a certain adjusting path corresponds to a certain number of current pulses through the coil (34, 340).

11. The device of claim 10, characterized in that the number of current pulses between the two end positions of the mirror holder is coordinated individually with the coefficients of friction.

12. The device of claims 9 to 11, characterized in that the amplitude of the adjusting force is defined by the amplitude of the current pulses.

13. The device of any of claims 9 to 12, characterized in that the amplitude of the adjusting force is defined by parts of the magnetic return paths being magnetically saturated at a certain current amplitude of the current pulses in the coil.

14. The device of any of claims 1 to 8, characterized in that the adjusting force of the electric linear motor is regulated via its power consumption in such a way that it only levels out and minimally exceeds the static frictional force so that the stroke of the linear motor is proportional to the switch-on time of the coil in continuous operation.

15. The device of any of claims 1 to 14, characterized in that the mirror holder (18) is designed with a tilting bearing in the form of a spherical cap (12) made of ferromagnetic material which is mounted in an opposed bearing equipped with permanent magnets (14, 16) on the housing.

16. The device of claim 15, characterized in that a defined air gap is adjusted between the permanent magnets (14, 16) and the spherical cap (12) by means of distance pieces (15).

17. The device of claim 16, characterized in that the distance pieces (15) are made of a material that has a constant coefficient of friction with respect to the material of the spherical cap (12).

18. The device of any of claims 15 to 17, characterized in that a magnetic coil is provided on the housing in addition to the permanent magnets (14, 16) for weakening the magnetic field of the permanent magnets and thus the holding power on the spherical cap (12) upon current flow.

19. The device of claim 18, characterized in that the magnetic coil is connected in series or in parallel with the linear motors (20, 22; 200).

20. The device of any of claims 1 to 19, in particular 1 to 14, characterized in that frictional elements (58) are associated with each linear motor laterally reversed with respect to the pivot (*M*) for fixing the mirror holder (18) when the linear motors are idle.

21. The device of any of claims 1 to 14 and 20, characterized in that the mirror holder (18) is equipped with a die (68) mounted in a bearing (300, 60-74) whose strength can be influenced electrically and which is connected with the housing (2).

22. The device of claim 21, characterized in that the bearing (300) is a vessel (60) filled with ferromagnetic grainy or powdery material (62) that is solidified by a permanent magnet (66) and whose permanent-magnetic flux is attenuated or compensated by a current-carrying magnetic coil (64).

23. The device of claim 22, characterized in that the magnetic coil (64) is connected in series or in parallel with the linear motors (20, 20'; 200).

24. An adjusting drive having an electric linear motor one of whose two mutually movable parts, e.g. the stator, is mounted firmly on a first body (2) while the other part, e.g. the rotor, is coupled with a second body (18) movable relative to the first body (2), an arrangement of bearings (10, 12; 100; 300) and a static friction and sliding friction defined within limits being provided between the first and second bodies (2, 18) and overcome in defined fashion by the force of the energized linear motor (20, 22'; 200).

25. The adjusting drive of claim 24, characterized in that the linear motor is fed with defined current pulses.

26. The adjusting drive of claim 24, characterized in that the output of the linear motor is regulated to overcome the friction.

## Revendications

1. Rétroviseur extérieur de véhicule à commande électrique comprenant un boîtier (2) dans lequel un support de miroir (18) est monté de façon basculante autour d'un point de rotation fixe (M), et deux moteurs d'entraînement électriques (20, 20'; 200) qui sont accouplés au support de miroir (18) , les moteurs d'entraînement étant constitués sous forme de moteurs linéaires (20, 20', 200), caractérisé en ce que le support de miroir (18) est maintenu par un frottement glissant et un frottement de retenue qui sont définis dans certaines limites, le frottement glissant et le frottement de retenue pouvant être surmontés par la force de chaque moteur linéaire (20, 20'; 200) en étant définis individuellement ou en commun en fonction de l'amplitude, ou de l'amplitude et de la durée, de la force des moteurs.

2. Dispositif selon la revendication 1, caractérisé en ce que les moteurs linéaires sont montés sur une plaque de support (2) du boîtier sous un angle inférieur à 180° par rapport au point de rotation (M), la direction de la course de chaque moteur linéaire étant sensiblement perpendiculaire au plan de réception de miroir du support de miroir (18).

3. Dispositif selon les revendications 1 et 2, caractérisé en ce que les moteurs linéaires sont soumis à une excitation magnétique permanente et comprennent au moins une bobine (34, 340) disposée dans le champ magnétique permanent et traversée par le courant.

4. Dispositif selon la revendication 3, caractérisé par un aimant permanent (32, 320) disposé sous une forme annulaire et magnétisé radialement, le flux magnétique étant dirigé par un élément en fer de passage de flux (42) monté de façon symétriquement spéculaire, séparé magnétiquement radialement à l'intérieur et comprenant un entrefer qui lui est associé, de forme annulaire et s'étendant parallèlement à l'axe, de façon que les flux magnétiques soient dirigés en sens contraire dans la partie interne radiale sur la gauche et sur la droite de la séparation par rapport à la direction de l'axe.

5. Dispositif selon la revendication 4, caractérisé en ce qu'il est prévue une bobine (34) montée de façon mobile dans l'entrefer de forme annulaire sur un support de bobine cylindrique (24), ce support de bobine (24) se prolongeant et traversant au moins en partie vers l'extérieur une ouverture de l'élément en fer de passage de flux (42), et la force de la bobine (34) étant transmise par ce dernier au support de miroir (18).

6. Dispositif selon la revendication 5, caractérisé en ce que le support de miroir de forme cylindre (24) est constitué au moins en partie en un matériau ferromagnétique de manière que l'ouverture de l'élément en fer de passage de flux soit couverte magnétiquement.

7. Dispositif selon les revendications 5 et 6, caractérisé en ce que sont prévus entre les bornes du bobinage de la bobine mobile (24) et les ouvertures constituées dans l'élément en fer de passage de flux (42) des éléments de câble à fils ou cordons à ressort (36) laissant passer le courant de la bobine.

8. Dispositif selon la revendication 4, caractérisé en ce qu'au moins une bobine (340) est montée axialement contre l'aimant permanent (320) et forme avec ce dernier un élément de passage de flux commun (421) et les deux parties de l'élément en fer de passage de flux (420) qui sont séparées magnétiquement et disposées radialement à l'intérieur sont fixées sur un axe mobile commun (240) qui transmet la force vers l'extérieur.

9. Dispositif selon l'une quelconque des revendications 1 à 8, caractérisé en ce que la bobine est soumise à un courant impulsionnel à durée de cycle définie, la force provoquée par le flux du courant étant supérieure à la force de frottement de retenue.

10. Dispositif selon la revendication 9, caractérisé en ce qu'un parcours de déplacement déterminé correspond à un nombre déterminé d'impulsions de courant passant par la bobine (34, 340).

11. Dispositif selon la revendication 10, caractérisé en ce que le nombre d'impulsions de courant entre les deux positions d'extrémité du support de miroir est adapté individuellement aux valeurs de frottement.

12. Dispositif selon l'une quelconque des revendications 9 à 11, caractérisé en ce que l'amplitude de la force de déplacement est définie par l'amplitude des impulsions de courant.

13. Dispositif selon l'une quelconque des revendications 9 à 12, caractérisé en ce que l'amplitude de la force de déplacement est définie du fait que pour une amplitude du courant déterminée des impulsions de courant dans la bobine, des parties des éléments en fer de passage de flux sont saturées magnétiquement.

14. Dispositif selon l'une quelconque des revendications 1 à 8, caractérisé en ce que la force du déplacement du moteur électrolinéaire est régulée par sa puissance absorbée, elle ne fait qu'égaliser la force du frottement de retenue ou ne la dépasse qu'au minimum, le mouvement de la course du moteur linéaire étant alors proportionnelle à la durée de branchement de la bobine en fonctionnement permanent.

15. Dispositif selon l'une quelconque des revendications 1 à 14, caractérisé en ce que le support de miroir (18) comprend un palier de pivotement en forme d'un calotte sphérique (12) en un métal ferromagnétique, calotte qui est montée dans un contrepalier muni d'aimants permanents (14, 16) du logement.

16. Dispositif selon la revendication 15, caractérisé en ce qu'un entrefer défini est obtenu au moyen des éléments d'écartement (15) entre les aimants permanents (14, 16) et la calotte sphérique (12).

17. Dispositif selon la revendication 16, caractérisé en ce que les éléments d'écartement (15) sont constitués en un matériau présentant une valeur de frottement constante par rapport au matériau de la calotte sphérique (12).

18. Dispositif selon l'une quelconque des revendications 15 à 17, caractérisé en ce que sont prévus dans le logement et en plus des aimants permanents (14, 16) une bobine magnétique qui affaiblit le champ magnétique des aimants permanents et de ce fait la force de retenue appliquée à la calotte sphérique (12) quand il y a passage du courant.

19. Dispositif sel on la revendication 18, caractérisé en ce que la bobine magnétique est montée en série ou en parallèle avec les moteurs linéaires (20, 22; 200).

20. Dispositif selon l'une quelconque des revendications 1 à 19, et en particulier 1 à 14, caractérisé en ce que des éléments de frottement (58) sont respectivement associés aux moteurs linéaires de façon symétrique par rapport au point de rotation (M), qui maintiennent le support de miroir (18) quand les moteurs linéaires ne sont pas actionnés.

21. Dispositif selon l'une quelconque des revendications 1 à 14 et 20, caractérisé en ce que le support de miroir (18) est équipé d'une colonne (68) qui est montée dans un support (300; 60-74) dont la résistance peut être influencée électriquement et qui est relié au boîtier (2).

22. Dispositif selon la revendication 21, caractérisé en ce que le support (300) est constitué par un récipient (60) rempli d'un matériau granulaire ou pulvérulent magnétique, qui est rendu rigide par un aimant permanent (66) et dont le flux magnétique permanent peut être affaibli ou compensé par une bobine magnétique (64) parcourue par le courant.

23. Dispositif selon la revendication 22, caractérisé en ce que la bobine magnétique (64) est montée en série ou en parallèle avec les moteurs linéaires (20, 20'; 200).

24. Mécanisme de déplacement comprenant un moteur linéaire électrique dont une partie appartenant aux deux parties qui sont mobiles l'une par rapport à l'autre, par exemple le stator, est montée de façon fixe sur un premier corps (2), alors que l'autre partie, par exemple l'induit, est accouplée à un second corps (18) mobile relativement au premier corps (2), un support (10, 12; 100; 300) étant prévu entre le premier et le second corps (2, 18) ainsi qu'un frottement de retenue et un frottement glissant définis dans certaines limites, qui sont surmontés de façon définie par la force du moteur linéaire (20, 20'; 200) parcouru par le courant.

25. Mécanisme de déplacement selon la revendication 24, caractérisé en ce que le moteur linéaire est alimenté en impulsions de courant définies.

26. Mécanisme de déplacement selon la revendication 24, caractérisé en ce que la puissance du moteur linéaire est réglée de manière à surmonter le frottement.
